# EUROPEAN PATENT APPLICATION

(11) **EP 4 495 880 A1**
(43) Date of publication of application: **22.01.2025**
(21) Application number: 23770487.9
(22) Date of filing: 06.03.2023
(51) Int. Cl.: G06T 7/00, G06T 7/40, G06T 7/60, G06T 7/62, G06T 1/00, G07D 7/12, G06V 10/143, G06V 10/54, G06V 10/60

(54) **PAPER SHEET IDENTIFYING DEVICE, PAPER SHEET PROCESSING DEVICE, AND PAPER SHEET IDENTIFICATION METHOD**

(30) Priority: 16.03.2022 JP 2022041194
(71) Applicant: GLORY LTD., Himeji-shi Hyogo 670-8567 (JP)
(72) Inventor: TAKETANI, Norikazu, Himeji-shi, Hyogo 670-8567 (JP); IKEDA, Yasushi, Himeji-shi, Hyogo 670-8567 (JP); ONISHI, Seiji, Himeji-shi, Hyogo 670-8567 (JP); MIYAGUCHI, Katsuhiro, Himeji-shi, Hyogo 670-8567 (JP); TAI, Masato, Himeji-shi, Hyogo 670-8567 (JP)
(74) Representative: SSM Sandmair
(86) International application number: PCT/JP2023/008205
(87) International publication number: WO 2023/176530

(57) **Abstract**

A sheet recognition unit of the present disclosure includes: an image acquisition unit configured to acquire a plurality of types of images of the sheet; and a control unit configured: to generate a plurality of types of shape information based on the plurality of types of images, and to select at least one type of shape information from among the plurality of types of shape information so as to execute selective shape determination processing which is determination processing related to a shape of the sheet based on the selected at least one type of shape information.

## Description

### TECHNICAL FIELD

The present disclosure relates to sheet recognition units, sheet handling devices, sheet recognition methods, sheet recognition systems, and sheet recognition programs.

### BACKGROUND ART

Sheets such as banknotes (printed money), gift vouchers, and checks have a variety of security features for anti-counterfeiting. For example, although paper usually used for sheets is made of vegetable fibers, paper made of synthetic fibers or a polymer sheet made of synthetic resin may be used in order to improve the properties such as durability, water resistance, and security. Banknotes made of polymer sheets are called polymer banknotes. Polymer banknotes having a transparent portion such as a clear window (transparent window) are difficult to counterfeit.

In collection of information such as the shape and the presence or absence of a sheet, an optical sensor such as an optical line sensor is usually used. A transparent portion transmits light emitted from the optical sensor, and a sheet having a transparent portion may therefore need to undergo different processes from a common sheet having no transparent portion.

For example, Patent Literature 1 discloses, as a technique of solving a problem that the external shape and a defect in a sheet having a transparent portion cannot be correctly extracted from a transmission image, a method of detecting properties such as the external shape and a defect in both an opaque portion and a transparent portion of a sheet from two transmission images obtained using different quantities of light.

Likewise, Patent Literature 2 discloses a method including OR-processing binarized images of a transmission image and a reflection image to correctly detect the external shape of a sheet having a transparent portion from the transmission image, and detecting the shape or the presence or absence of the sheet based on the OR-processed image.

### CITATION LIST

### - Patent Literature

Patent Literature 1: JP 2020-113270 A
Patent Literature 2: WO 2018/167876

### SUMMARY OF INVENTION

### - Technical Problem

Depending on the types and other properties of sheets, the accuracy may be higher when the shape of a sheet is detected from its transmission image than when the shape of the sheet is detected by the method disclosed in Patent Literature 1 or 2, or vice versa. For example, in the case of a sheet having a transparent portion, detecting the shape of the sheet by the method disclosed in Patent Literature 1 or 2 may achieve a higher accuracy than the other way, whereas in the case of a banknote having no transparent portion, detecting the shape of the sheet from its transmission image may achieve a higher accuracy than the other way.

However, one sheet recognition unit conventionally detects the shapes of sheets only by one preset method. Thus, when handling many types of sheets, the sheet recognition unit with only the one preset method may exhibit a low accuracy of shape detection depending on the types of the sheets. This may lead to a low accuracy of determination processing based on the detected shape information, such as processing of determining the size of a sheet or a defect in a sheet.

In response to the above issues, an object of the present disclosure is to provide a sheet recognition unit, a sheet handling device, a sheet recognition method, a sheet recognition system, and a sheet recognition program that can increase the accuracy of determination processing related to the shapes of sheets.

### - Solution to Problem

In order to solve the above issues and to achieve the objects, one aspect of the present invention is directed to (1) a sheet recognition unit which recognizes a sheet, the sheet recognition unit including an image acquisition unit configured to acquire a plurality of types of images of the sheet, and a control unit configured to generate a plurality of types of shape information based on the plurality of types of images, and to select at least one type of shape information from among the plurality of types of shape information so as to execute selective shape determination processing which is determination processing related to a shape of the sheet based on the selected at least one type of shape information.

(2) In the sheet recognition unit of (1) above, the control unit may be configured to select the at least one type of shape information based on a type of the sheet.

(3) In the sheet recognition unit of (1) or (2) above, the control unit may be configured to execute defect determination processing of determining a defect in the sheet as the selective shape determination processing.

(4) In the sheet recognition unit of any one of (1) to (3) above, the control unit may be configured to execute, before the selective shape determination processing, fixed shape determination processing which is determination processing related to a shape of the sheet based on preset shape information among the plurality of types of shape information.

(5) In the sheet recognition unit of (4) above, the control unit may be configured to execute size determination processing of determining a size of the sheet as the fixed shape determination processing.

(6) In the sheet recognition unit of (5) above, the control unit may be configured to determine a type of the sheet based on a result of the size determination processing, and to select at least one type of shape information from among the plurality of types of shape information based on the determined type so as to execute defect determination processing of determining a defect in the sheet as the selective shape determination processing based on the selected at least one type of shape information.

(7) In the sheet recognition unit of (5) above, the control unit may be configured to determine a type of the sheet based on a result of the size determination processing, and to select one type of shape information from among the plurality of types of shape information based on the determined type to re-execute the size determination processing as the selective shape determination processing based on the selected one type of shape information.

(8) In the sheet recognition unit of (7) above, the control unit may be configured, after executing the size determination processing as the selective shape determination processing, to select at least one type of shape information from among the plurality of types of shape information based on the determined type so as to execute defect determination processing of determining a defect in the sheet as the selective shape determination processing based on the selected at least one type of shape information.

(9) In the sheet recognition unit of any one of (1) to (3) above, the control unit may be configured to determine a type of the sheet based on a pattern on at least one type of an image included in the plurality of types of images, and to select at least one type of shape information from among the plurality of types of shape information based on the determined type so as to execute the selective shape determination processing based on the selected at least one type of shape information.

(10) In the sheet recognition unit of (9) above, the control unit may be configured to select one type of shape information from among the plurality of types of shape information based on the determined type so as to execute size determination processing of determining a size of the sheet as the selective shape determination processing based on the selected one type of shape information, and to select at least one type of shape information from among the plurality of types of shape information based on the determined type so as to execute defect determination processing of determining a defect in the sheet as the selective shape determination processing based on the selected at least one type of shape information.

(11) In the sheet recognition unit of any one of (1) to (10) above, the image acquisition unit may be configured to acquire at least a transmission image and a reflection image of the sheet as the plurality of types of images, and the control unit may be configured to generate first shape information by detecting an edge of the sheet in the transmission image and also generate second shape information by generating an OR-processed image through OR-processing of the transmission image and the reflection image and detecting an edge of the sheet in the generated OR-processed image.

(12) In the sheet recognition unit of (11) above, the control unit may be configured to execute the selective shape determination processing based on the second shape information in a case where the sheet has a transparent portion in an end, and to execute the selective shape determination processing based on the first shape information in a case where the sheet has no transparent portion in any end.

(13) A second aspect of the present disclosure is directed to a sheet handling device including the sheet recognition unit according to any one of (1) to (12) above.

(14) A third aspect of the present disclosure is directed to a sheet recognition method for recognizing a sheet, the sheet recognition method including the steps of:
(A) acquiring a plurality of types of images of the sheet;
(B) generating a plurality of types of shape information based on the plurality of types of images; and (C) selecting at least one type of shape information from among the plurality of types of shape information so as to execute selective shape determination processing which is determination processing related to a shape of the sheet based on the selected at least one type of shape information.

(15) In the sheet recognition method of (14) above, the step (C) may include selecting the at least one type of shape information based on a type of the sheet.

(16) In the sheet recognition method of (14) or (15) above, the step (C) may include executing defect determination processing of determining a defect in the sheet as the selective shape determination processing.

(17) In the sheet recognition method of any one of (14) to (16) above, the step (C) may include executing, before the selective shape determination processing, fixed shape determination processing which is determination processing related to a shape of the sheet based on preset shape information among the plurality of types of shape information.

(18) In the sheet recognition method of (17) above, the step (C) may include executing size determination processing of determining a size of the sheet as the fixed shape determination processing.

(19) In the sheet recognition method of (18) above, the step (C) may include determining a type of the sheet based on a result of the size determination processing, and selecting at least one type of shape information from among the plurality of types of shape information based on the determined type so as to execute defect determination processing of determining a defect in the sheet as the selective shape determination processing based on the selected at least one type of shape information.

(20) In the sheet recognition method of (18) above, the step (C) may include determining a type of the sheet based on a result of the size determination processing, and selecting one type of shape information from among the plurality of types of shape information based on the determined type so as to re-execute the size determination processing as the selective shape determination processing based on the selected one type of shape information.

(21) In the sheet recognition method of (20) above, the step (C) may include, after executing the size determination processing as the selective shape determination processing, selecting at least one type of shape information from among the plurality of types of shape information based on the determined type so as to execute defect determination processing of determining a defect in the sheet as the selective shape determination processing based on the selected at least one type of shape information.

(22) In the sheet recognition method of any one of (14) to (16) above, the step (C) may include determining a type of the sheet based on a pattern on at least one type of an image included in the plurality of types of images, and selecting at least one type of shape information from among the plurality of types of shape information based on the determined type so as to execute the selective shape determination processing based on the selected at least one type of shape information.

(23) In the sheet recognition method of (22) above, the step (C) may include selecting one type of shape information from among the plurality of types of shape information based on the determined type so as to execute size determination processing of determining a size of the sheet as the selective shape determination processing based on the selected one type of shape information, and selecting at least one type of shape information from among the plurality of types of shape information based on the determined type so as to execute defect determination processing of determining a defect in the sheet as the selective shape determination processing based on the selected at least one type of shape information.

(24) In the sheet recognition method of any one of (14) to (23) above, the step (A) may include acquiring at least a transmission image and a reflection image of the sheet as the plurality of types of images, and the step (B) may be generating first shape information by detecting an edge of the sheet in the transmission image and also generating second shape information by generating an OR-processed image through OR-processing of the transmission image and the reflection image and detecting an edge of the sheet in the generated OR-processed image.

(25) In the sheet recognition method of (24) above, the step (C) may include executing the selective shape determination processing based on the second shape information in a case where the sheet has a transparent portion in an end, and executing the selective shape determination processing based on the first shape information in a case where the sheet has no transparent portion in any end.

(26) A fourth aspect of the present disclosure is directed to a sheet recognition system which recognizes a sheet, the sheet recognition system including: an image acquisition unit configured to acquire a plurality of types of images of the sheet; a shape information generation unit configured to generate a plurality of types of shape information based on the plurality of types of images; a shape information selection unit configured to select at least one type of shape information from among the plurality of types of shape information; and a selective shape determination unit configured to execute selective shape determination processing which is determination processing related to a shape of the sheet based on the selected at least one type of shape information

(27) A fifth aspect of the present disclosure is directed to a sheet recognition program which recognizes a sheet, the sheet recognition program causing a sheet recognition unit to execute the processing tasks of:
acquiring a plurality of types of images of the sheet;
generating a plurality of types of shape information based on the plurality of types of images; and selecting at least one type of shape information from among the plurality of types of shape information so as to execute selective shape determination processing which is determination processing related to a shape of the sheet based on the selected at least one type of shape information.

### - Advantageous Effects of Invention

The present disclosure can provide a sheet recognition unit, a sheet handling device, a sheet recognition method, a sheet recognition system, and a sheet recognition program that can achieve a high accuracy of determination processing related to the shapes of sheets.

### BRIEF DESCRIPTION OF DRAWINGS

FIG. 1 is a schematic side view of a transport path for banknotes, illustrating an example of a configuration of a sheet recognition unit of Embodiment 1.
FIG. 2 is a block diagram illustrating an example of a configuration of the sheet recognition unit of Embodiment 1.
FIG. 3 is a schematic oblique view illustrating an example of a configuration of the sheet recognition unit of Embodiment 1.
FIG. 4 is a flowchart illustrating an example of an operation of the sheet recognition unit of Embodiment 1.
FIG. 5 is a block diagram illustrating an example of a configuration of a sheet recognition unit of Embodiment 2.
FIG. 6 is a flowchart illustrating an example of an operation of the sheet recognition unit of Embodiment 2.
FIG. 7 is a block diagram illustrating an example of a configuration of a sheet recognition unit of Embodiment 3.
FIG. 8 is a flowchart illustrating an example of an operation of the sheet recognition unit of Embodiment 3.
FIG. 9 is a block diagram illustrating an example of a configuration of a sheet recognition unit of Embodiment 4.
FIG. 10 is a flowchart illustrating an example of an operation of the sheet recognition unit of Embodiment 4.
FIG. 11 is a schematic perspective view of the appearance of an example of a sheet handling device of Embodiment 5.
FIG. 12 is a block diagram illustrating an example of a configuration of the sheet handling device of Embodiment 5.
FIG. 13 is a schematic cross-sectional view illustrating an example of a configuration of an image acquisition unit in the sheet recognition unit of Embodiment 5.
FIG. 14 is a schematic view illustrating the processing executed by a sheet handling device of Embodiment 6.

### DESCRIPTION OF EMBODIMENTS

Embodiments of a sheet recognition unit, a sheet handling device, a sheet recognition method, a sheet recognition system, and a sheet recognition program of the present disclosure are described in detail hereinbelow with reference to the drawings. Various sheets such as banknotes, checks, vouchers, bills, business forms, documents of value, and card-like media are applicable as sheets used in the present disclosure. Devices for banknotes are used hereinbelow as examples to describe the present disclosure.

The sheet recognition program may be preinstalled in the sheet recognition unit, the sheet handling device, or the sheet recognition system, or may be provided to the operator as a program stored in a computer-readable storage medium or via the network.

The sheet recognition unit and the sheet recognition system of the present disclosure may each include a storage unit including a storage device such as a semiconductor memory (RAM or ROM) or a hard disk.

The same components or components having similar functions in the following description are commonly assigned with the same reference sign throughout the drawings as appropriate, and description thereof is omitted as appropriate. Drawings illustrating a structure appropriately include the XYZ coordinate system where the XYZ axes are perpendicular to one another.

### (Embodiment 1)

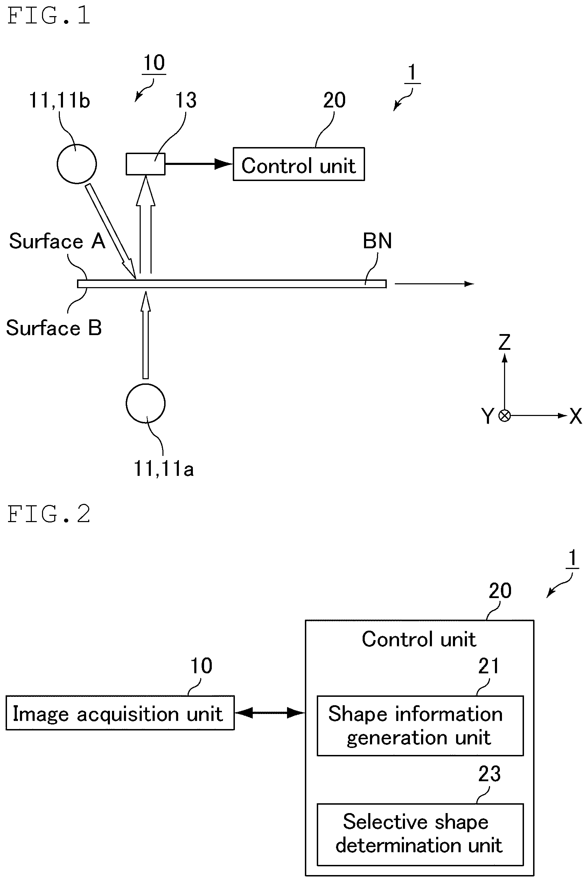

With reference to FIG. 1, the configuration of a sheet recognition unit of the present embodiment is described. FIG. 1 is a schematic side view of a transport path for banknotes, illustrating an example of a configuration of the sheet recognition unit of Embodiment 1. FIG. 2 is a block diagram illustrating an example of a configuration of the sheet recognition unit of Embodiment 1.

As shown in FIG. 1 and FIG. 2, a sheet recognition unit 1 of the present embodiment is a device that recognizes a banknote BN as a sheet and includes an image acquisition unit 10 and a control unit 20.

The image acquisition unit 10 acquires a plurality of types of images (image data) of a banknote BN. The plurality of types of images includes images (image data) acquired (captured) in a state where the banknote BN is irradiated with light under different conditions (illumination environments). Specific examples of the different conditions (illumination environments) include a condition where the banknote BN is irradiated with light from different directions, a condition where the banknote BN is irradiated with different quantities of light, and a condition where the banknote BN is irradiated with light in different wavelength bands. A "quantity of light" here means a physical quantity that is proportional to the radiation intensity and the duration of incidence of the incident light.

As shown in FIG. 1, the image acquisition unit 10 may include a light source 11 which irradiates a banknote BN with light, and a light receiving unit 13 which receives transmission light transmitted through a banknote BN and/or reflection light reflected by the banknote BN. Banknotes BN to be recognized may be transported in the X direction in the XY plane.

The image acquisition unit 10 may include a light source 11a and a light source 11b as the light source 11. The light source 11a and the light receiving unit 13 are on opposite sides of the banknote BN. The light source 11b and the light receiving unit 13 are on the same side of the banknote BN. In this case, reflection light emitted from the light source 11b and reflected by one of the main surfaces (hereinafter, surface A) of the banknote BN and transmission light emitted from the light source 11a to the other main surface (hereinafter, surface B) of the banknote BN and transmitted through the banknote BN are each received by the light receiving unit 13.

Light emitted from the light source 11 may be light in a wavelength band including the peak wavelength and the wavelengths around the peak wavelength. The type (wavelength) of light emitted from the light source 11 is not limited. Examples of the light include white light, red light, green light, blue light, and other visible light, ultraviolet light, and infrared light.

The light sources 11a and 11b may emit light in wavelength bands different from each other or may emit light in the same wavelength band (e.g., green light or infrared light). In the latter case, the irradiation periods of light emitted from the light source 11a and the light source 11b may not coincide with each other.

The light receiving unit 13 may receive transmission light emitted from the light source 11a toward the surface B of the banknote BN and transmitted through the banknote BN during the emission of light from the light source 11a, and may receive light emitted from the light source 11b and reflected by the surface A of the banknote BN during the emission of light from the light source 11b. At this time, the light receiving unit 13 can function as a sensor that has sensitivity to at least the wavelength band of the transmission light transmitted through the banknote BN and the wavelength band of the reflection light reflected by the banknote BN. The light receiving unit 13 outputs an electrical signal according to the quantity of the received light as the image data. Specifically, the light receiving unit 13 may include a light receiving element. The light receiving element may receive light, convert the light to an electrical signal corresponding to the quantity of the incident light, and then output the electrical signal.

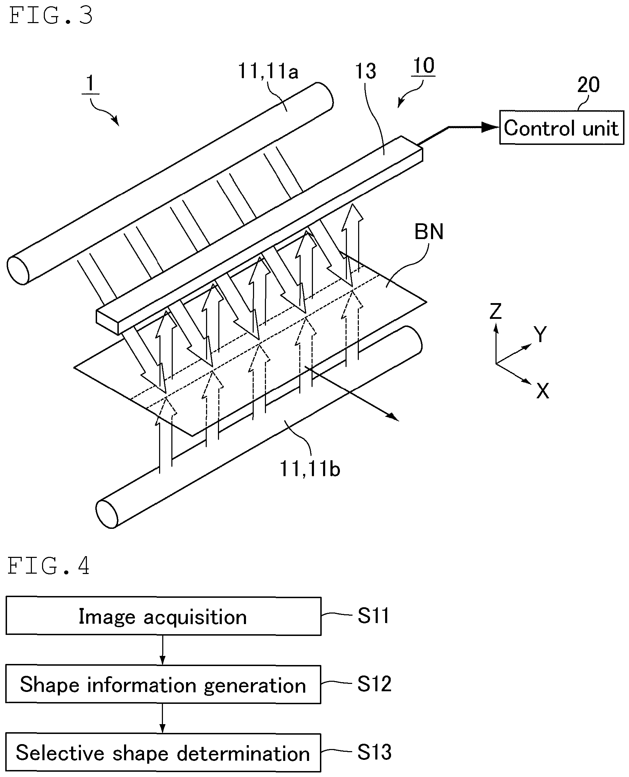

FIG. 3 is a schematic oblique view illustrating an example of a configuration of the sheet recognition unit of Embodiment 1.

As shown in FIG. 3, the image acquisition unit 10 may define an optical line sensor lying in the Y direction. In this case, the Y direction corresponds to the main scanning direction of the optical line sensor, and the X direction corresponds to the sub-scanning direction of the optical line sensor.

The light source 11 (the light sources 11a and 11b) may be longer than the length of any banknote BN in the Y direction and apply light to a banknote BN entirely in the Y direction in a linear pattern extending in the Y direction. In this case, the light source 11 (each of the light sources 11a and 11b) may include a transparent, linear rod-shaped light guide and light emitting elements (usually two or more, e.g., light emitting diodes (LEDs)) facing at least one of the two end surfaces of the light guide, and the light source 11 may irradiate the banknote BN with light via the light guide.

The light receiving unit 13 may receive light in a linear pattern longer than the length of the banknote BN in the Y direction and transmitted through or reflected by the entire banknote BN in the Y direction. The light receiving unit 13 may include a plurality of light receiving elements (light receiving pixels) arranged in a line in the Y direction, and may define a linear image sensor. In other words, the light receiving unit 13 may output an electrical signal corresponding to the quantity of incident light from a plurality of channels (columns) corresponding to the light receiving elements (positions in the Y direction). The channels (columns) are numbers assigned in order to the light receiving elements in the Y direction. Here, the light receiving unit 13 may output, as the image data, lines of data which are sets of data on light received by the channels simultaneously. While a banknote BN is transported in the X direction (sub-scanning direction), irradiation with light from the light source 11 (the light sources 11a and 11b) and reception of light by the light receiving unit 13 are repeated, so that image data on the entire banknote BN is output.

As described above, taking a predetermined image capturing cycle as one period, the image acquisition unit 10 may acquire an image of the entire banknote BN by consecutively repeating the period.

The image data acquired by the image acquisition unit 10 is defined by a plurality of pixels arranged in a matrix pattern in the Y direction (main scanning direction) and the X direction (sub-scanning direction). The address of each pixel is identified using a channel (column) and a line (row). A channel corresponds to a position in the Y direction, represented by a channel in the light receiving unit 13. A line (row) corresponds to a position in the X direction, represented by one of numbers sequentially assigned to lines of data sequentially output from the light receiving unit 13.

The image acquisition unit 10 may acquire at least a transmission image and a reflection image of a banknote BN as a plurality of types of images.

A transmission image is an image based on light transmitted through the banknote BN after being emitted from the light source 11a which opposes the light receiving unit 13 across the banknote BN. A reflection image is an image based on light reflected by the banknote BN after being emitted from the light source 11b on the same side as the light receiving unit 13 relative to the banknote BN.

In addition, the image acquisition unit 10 may capture at least a first transmission image and a second transmission image of the banknote BN as the plurality of types of images. The first transmission image and the second transmission image are transmission images captured using different quantities (quantities of light per exposure) of light (e.g., infrared light) applied to the banknote BN. For example, the first transmission image is an image obtained using a large quantity of infrared light, and the second transmission image is an image obtained using a small quantity of infrared light.

As shown in FIG. 2, the control unit 20 includes a shape information generation unit 21 and a selective shape determination unit 23.

The control unit 20 is a controller that controls the components of the sheet recognition unit 1, and is configured as a computer system including a central processing unit (CPU) and various hardware devices (e.g., field programmable gate array (FPGA)) controlled by the CPU. The control unit 20 uses its CPU to execute predetermined software programs to perform various processing tasks.

The shape information generation unit 21 generates a plurality of types of shape information based on the plurality of types of images acquired by the image acquisition unit 10. Here, the shape information includes information (data) indicating two-dimensional coordinates of pixels corresponding to the edge of the banknote BN in the image. For example, the shape information generation unit 21 detects pixels corresponding to both ends of the banknote BN in each line of data (row data) constituting the image data, and also detects pixels corresponding to the ends of the banknote BN in data from each channel (column data) and constituting the image data. The shape information generation unit 21 thereby identifies the two-dimensional coordinates of the pixels corresponding to the entire peripheral edge of the banknote BN. The shape information may also include information (image data) on images (e.g., binarized images and OR-processed images, described later) directly used to detect the two-dimensional coordinates of the pixels corresponding to the edge of the banknote BN.

The plurality of types of images and the plurality of types of shape information may be in a one-to-one correspondence with each other or may not be in a one-to-one correspondence with each other. In the former case, one type of shape information is generated from the corresponding type of image. In the latter case, one type of shape information is generated from one or more types of images, where some of the types of images used for different types of shape information may be mutually common or the types of images used for different types of shape information may not be mutually common (may be completely different).

For example, the shape information generation unit 21 may detect the edge of the banknote BN from a transmission image of the banknote BN to generate first shape information. Specifically, in this case, the shape information generation unit 21 binarizes the transmission image of the banknote BN at a given threshold to detect the edge of a region (e.g., white region) where the medium is present in the binarized image. In this case, the shape information generation unit 21 may generate first shape information using not only the binarized image of the transmission image of the banknote BN but also an additional image in combination with the binarized image.

The shape information generation unit 21 may OR-process a transmission image and a reflection image of a banknote BN to generate an OR-processed image, followed by detecting the edge of the banknote BN in the generated OR-processed image to generate second shape information. Specifically, in this case, the shape information generation unit 21 binarizes the transmission image and the reflection image of the banknote BN at respective given thresholds and then OR-process the two binarized images to generate an OR-processed image. In other words, the shape information generation unit 21 references the pixels corresponding to each other in the two binarized images and generates an image with data on the pixel indicating the presence of a medium when at least one of the referenced pixels indicates the presence of the medium (e.g., white) or indicating the absence of the medium when both of the referenced pixels indicate the absence of the medium (e.g., black). The shape information generation unit 21 then detects the edge of the region (e.g., white region) where the medium is present in the generated OR-processed image.

The transmission image used to generate first shape information and the transmission image used to generate second shape information are usually the same image but may be different types of transmission images (e.g., images obtained using light in different wavelength bands).

The transmission image and the reflection image used to generate second shape information may be images obtained using light (e.g., infrared light) in the same wavelength band or may be images obtained using light in different wavelength bands.

The shape information generation unit 21 may also generate shape information based on at least one of the first transmission image or the second transmission image obtained using different quantities of light (quantities of light per exposure). For example, the shape information generation unit 21 may generate shape information by detecting the edge of the banknote BN in a binarized image of the first transmission image or may generate shape information by detecting the edge of the banknote BN in a binarized image of the second transmission image.

The selective shape determination unit 23 selects at least one type of shape information from among a plurality of types of shape information generated by the shape information generation unit 21 so as to execute selective shape determination processing. Here, the selective shape determination processing is determination processing related to the shape of a banknote BN based on the selected at least one type of shape information. This enables selection of shape information according to the type and/or other properties of the banknote to be recognized and execution of determination processing (selective shape determination processing) related to the shape of the banknote based on the selected shape information. Thus, the accuracy of determination processing related to the shapes of banknotes can be increased.

As described above, the selective shape determination unit 23 may select at least one type of shape information from among a plurality of types of shape information according to the banknote BN, i.e., the characteristics such as the attributes, properties, and conditions (e.g., transportation conditions) of the banknote to be recognized.

Specifically, the selective shape determination unit 23 may select at least one type of shape information based on the type of the banknote BN. This enables selection of shape information according to the type of the banknote to be recognized and execution of determination processing (selective shape determination processing) related to the shape of the banknote based on the selected shape information. Thus, the accuracy of determination processing related to the shapes of a variety of types of banknotes can be increased.

In this case, for each type of banknote to be recognized, template information linked with one or more types of shape information to be selected may be prepared. Then, the selective shape determination unit 23 may reference the template information to select at least one type of shape information linked with the type of the banknote BN.

The template information is the standard information used in recognition processing and defines, for each type of banknote to be recognized, at least one type (usually two or more types) of attributes (characteristics) of the banknote.

The specific type (contents) of the selective shape determination processing executed by the selective shape determination unit 23 and the number of the processing tasks are not limited. The selective shape determination unit 23 may execute defect determination processing of determining a defect in the banknote BN as the selective shape determination processing. In this case, a defect in the banknote is determined based on the selected shape information, so that the accuracy of defect determination processing for banknotes can be increased.

In the defect determination processing, for example, the presence or absence of a fold, a tear, a hole, or other defects in the banknote BN may be determined.

In addition, the selective shape determination unit 23 may execute size determination processing of determining the size of the banknote BN as the selective shape determination processing. The size determination processing is processing of detecting the size of the banknote BN and may detect, for example, the length and width of the banknote BN. The length of a sheet is the length in the short edge orientation of the sheet, and the width of a sheet is the length in the long edge orientation of the sheet.

The selective shape determination unit 23 may further execute every executable selective shape determination processing.

The selective shape determination unit 23 may execute the selective shape determination processing based on the second shape information in the case of a banknote BN having a transparent portion in its end, while executing the selective shape determination processing based on the first shape information in the case of a banknote BN having no transparent portion in any of its ends. This enables execution of the determination processing related to the shape of the banknote with a higher accuracy based on the second shape information from the OR-processed image in the case of the banknote having a transparent portion in its end, and execution of the determination processing related to the shape of the banknote with a higher accuracy based on the first shape information from the transmission image in the case of the banknote having no transparent portion in any of its ends.

As described above, the banknote BN to be recognized may have a transparent portion such as a clear window that transmits light such as infrared light and visible light applied and an opaque portion. A banknote BN having a transparent portion may be a polymer banknote formed from a polymer sheet. The material of the transparent portion may be a synthetic resin (polymer). A banknote BN having a transparent portion and an opaque portion may be one (hybrid banknote) whose transparent portion is formed from a polymer sheet and whose opaque portion is formed from paper made of vegetable fibers or synthetic fibers. As described here, the base material of the banknote BN may be a polymer or a composite of paper and a polymer. The transparent portion may partially include an optically variable device (OVD) such as rainbow hologram.

In the case where the banknote BN has a transparent portion in its end, at least part of the edge (outer periphery) of the banknote BN is defined by the transparent portion. In the case where the banknote BN has no transparent portion in any of its ends, the entire edge (outer periphery) of the banknote BN is defined by the opaque portion. The transparent portion of each banknote BN is a region having an infrared (e.g., wavelength range: 760 to 1100 nm) transmittance of from 30% to 90%, for example, and the front and back surfaces thereof have respective patterns printed thereon. The opaque portion of each banknote BN is a region having an infrared transmittance of 10% or lower, for example, and the front and back surfaces thereof have respective patterns, such as a portrait or the denomination thereof, printed thereon.

Next, with reference to FIG. 4, the operation of the sheet recognition unit 1 of the present embodiment is described. FIG. 4 is a flowchart illustrating an example of an operation of the sheet recognition unit of Embodiment 1.

As shown in FIG. 4, first, the image acquisition unit 10 acquires a plurality of types of images of a banknote BN (step S11).

Next, the shape information generation unit 21 generates a plurality of types of shape information based on the plurality of types of images (step S12).

Then, the selective shape determination unit 23 selects at least one type of shape information from among the plurality of types of shape information so as to execute selective shape determination processing based on the selected at least one type of shape information (step S13), so that the operation of the sheet recognition unit 1 ends.

When the selective shape determination unit 23 executes a plurality of types of selective shape determination processing, the order of executing the types of processing is not limited and can appropriately be set according to, for example, the template settings.

### (Embodiment 2)

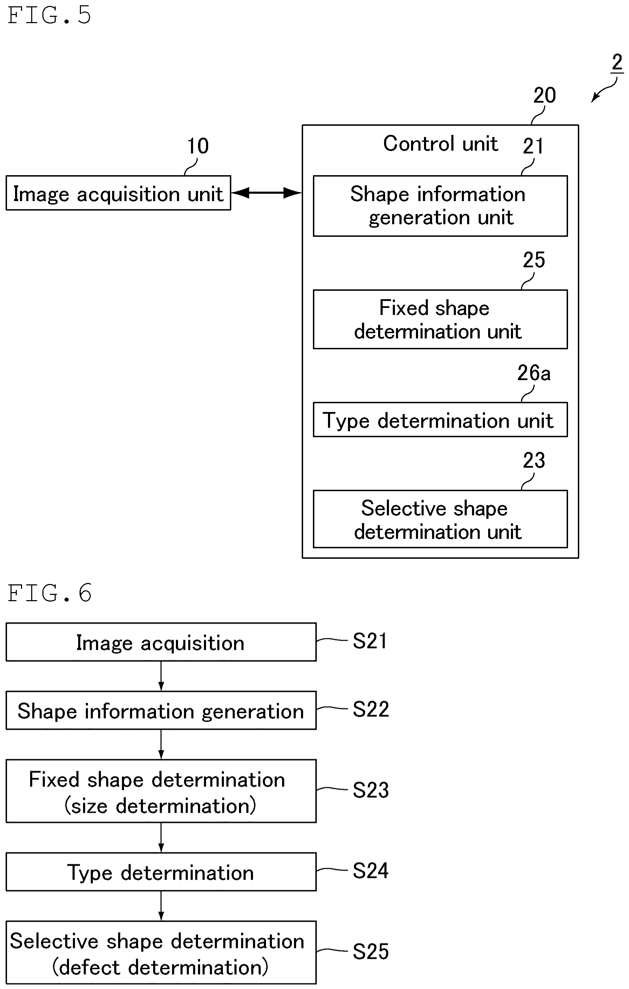

With reference to FIG. 5, a sheet recognition unit of the present embodiment is described. FIG. 5 is a block diagram illustrating an example of a configuration of the sheet recognition unit of Embodiment 2.

As shown in FIG. 5, a sheet recognition unit 2 of the present embodiment differs from the sheet recognition unit 1 of Embodiment 1 in that the control unit 20 further includes a fixed shape determination unit 25 and a type determination unit 26a.

The fixed shape determination unit 25, before the selective shape determination processing executed by the selective shape determination unit 23, executes fixed shape determination processing. Here, the fixed shape determination processing is determination processing related to the shape of the banknote BN based on the preset shape information among the plurality of types of shape information generated by the shape information generation unit 21. The shape information may be preset manually or automatically by the sheet recognition unit 2. In the latter case, for example, the sheet recognition unit 2, when referencing all the template information stored in the sheet recognition unit 2 and finding even a piece of template information specifying the shape information to be used, may preset the piece of shape information as the shape information for the fixed shape determination processing.

The specific type (contents) of the fixed shape determination unit 25 by the fixed shape determination unit 25 and the number thereof are not limited. The fixed shape determination unit 25 may execute size determination processing of determining the size of the banknote BN as the fixed shape determination processing.

The type determination unit 26a determines the type of the banknote BN based on the result of the size determination processing by the fixed shape determination unit 25. In this case, for each type of banknote to be recognized, template information linked with the standard values (which may be numerical ranges) of the length and width of the banknote may be prepared in advance. The type determination unit 26a then compares the length and width determined by the fixed shape determination unit 25 to the template information to determine the type of the banknote BN.

When there is no template information to which the length and/or width determined by the fixed shape determination unit 25 correspond(s), the sheet recognition unit 2 may handle the banknote BN as an unfit note or an abnormal note.

The type of banknote herein encompasses not only the denomination (a concept indicating the issuing country (including region) and currency and amount of the banknote) but also the concept indicating the issuing country (including region) and currency of a banknote regardless of the amount, such as US dollar, euro, Japanese yen, and Hong Kong dollar.

The type determination unit 26a, as with a type determination unit 26b described in Embodiment 4, may determine the type of a banknote BN based on the pattern on at least one type of an image included in a plurality of types of images, and may finally determine the type of the banknote BN based on the determination result of the pattern and the determination result of the size described above.

In the present embodiment, the selective shape determination unit 23 selects at least one type of shape information from among a plurality of types of shape information based on the type of the banknote BN determined by the type determination unit 26a so as to execute defect determination processing as the selective shape determination processing based on the selected at least one type of shape information. This enables determination of a defect in the banknote based on the selected shape information according to the type of the banknote to be recognized, thus further increasing the accuracy of the defect determination processing for banknotes.

Next, with reference to FIG. 6, the operation of the sheet recognition unit 2 of the present embodiment is described. FIG. 6 is a flowchart illustrating an example of an operation of the sheet recognition unit of Embodiment 2.

As shown in FIG. 6, first, the image acquisition unit 10 acquires a plurality of types of images of a banknote BN (step S21).

Next, the shape information generation unit 21 generates a plurality of types of shape information based on the plurality of types of images (step S22).

Thereafter, the fixed shape determination unit 25 executes fixed shape determination processing such as size determination processing (step S23).

Next, the type determination unit 26a determines the type of the banknote BN based at least on the result of the size determination processing executed by the fixed shape determination unit 25 (step S24).

The selective shape determination unit 23 then selects at least one type of shape information from among a plurality of types of shape information based on the type of the banknote BN determined by the type determination unit 26a so as to execute defect determination processing as the selective shape determination processing based on the selected at least one type of shape information (step S25), so that the operation of the sheet recognition unit 2 ends.

### (Embodiment 3)

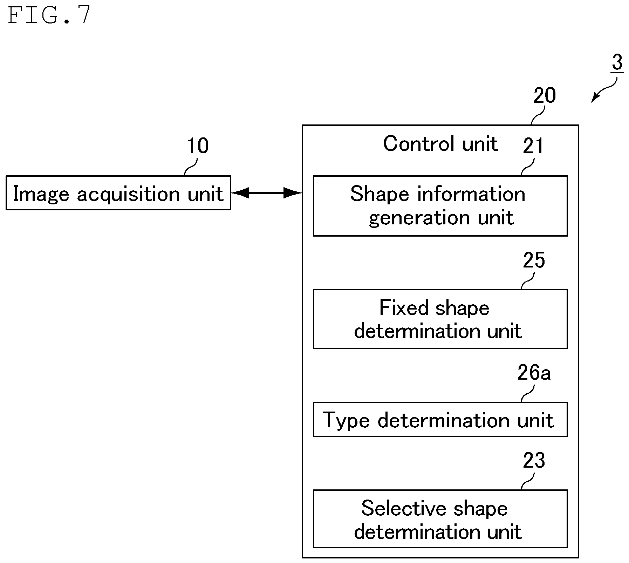

With reference to FIG. 7, the configuration of a sheet recognition unit of the present embodiment is described. FIG. 7 is a block diagram illustrating an example of a configuration of the sheet recognition unit of Embodiment 3.

As shown in FIG. 7, a sheet recognition unit 3 of the present embodiment, as in Embodiment 2, differs from the sheet recognition unit 1 of Embodiment 1 in that the control unit 20 further includes a fixed shape determination unit 25 and a type determination unit 26a.

Detailed description of the fixed shape determination unit 25 and the type determination unit 26a is omitted because they are similar to those in Embodiment 2. Also in the present embodiment, the fixed shape determination unit 25 may execute size determination processing of determining the size of a banknote BN as the fixed shape determination processing.

In the present embodiment, the selective shape determination unit 23 selects one type of shape information from among a plurality of types of shape information based on the type of the banknote BN determined by the type determination unit 26a to re-execute the size determination processing as the selective shape determination processing based on the selected one type of shape information. This enables re-determination of the size of the banknote based on the selected shape information according to the type of the banknote to be recognized, thus enabling determination of the size of the banknote with a higher accuracy.

In addition, in the present embodiment, the selective shape determination unit 23, after executing the size determination processing as the selective shape determination processing, selects at least one type of shape information from among a plurality of types of shape information based on the type of the banknote BN determined by the type determination unit 26a so as to execute defect determination processing as the selective shape determination processing based on the selected at least one type of shape information. This enables determination of a defect in the banknote based on the selected shape information according to the type of the banknote to be recognized, thus further increasing the accuracy of the defect determination processing for banknotes.

The one type of shape information selected for the second size determination processing and the at least one type of shape information selected for the defect determination processing may include a common type of shape information or may not include a common type of shape information (all the types may be different).

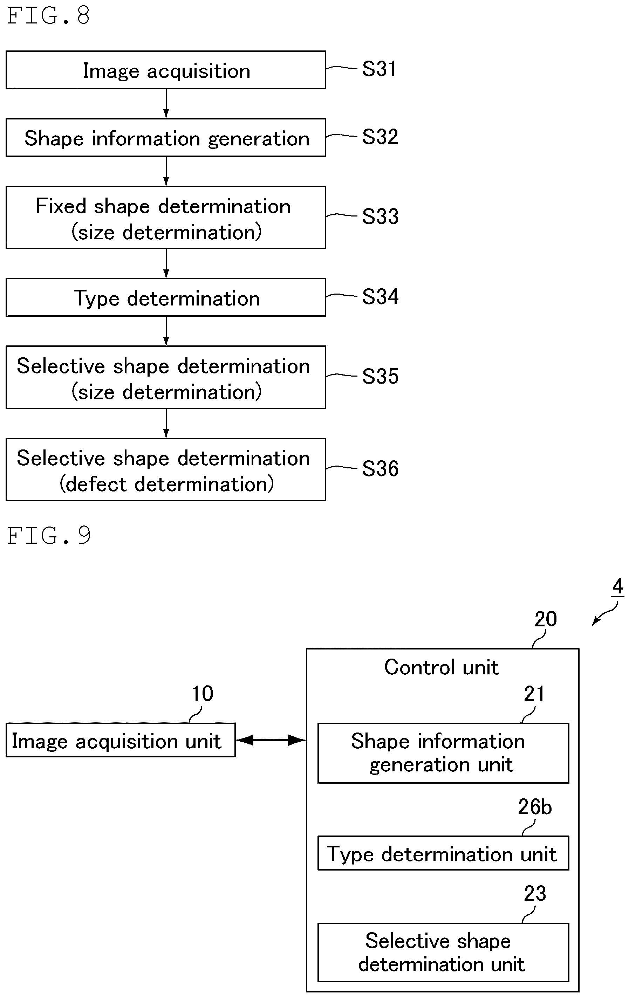

Next, with reference to FIG. 8, the operation of the sheet recognition unit 3 of the present embodiment is described. FIG. 8 is a flowchart illustrating an example of an operation of the sheet recognition unit of Embodiment 3.

As shown in FIG. 8, first, the image acquisition unit 10 acquires a plurality of types of images of a banknote BN (step S31).

Next, the shape information generation unit 21 generates a plurality of types of shape information based on the plurality of types of images (step S32).

Thereafter, the fixed shape determination unit 25 executes fixed shape determination processing such as size determination processing (step S33).

Next, the type determination unit 26a determines the type of the banknote BN based at least on the result of the size determination processing executed by the fixed shape determination unit 25 (step S34).

The selective shape determination unit 23 then selects one type of shape information from among a plurality of types of shape information based on the type of the banknote BN determined by the type determination unit 26a to re-execute the size determination processing as the selective shape determination processing based on the selected one type of shape information (step S35).

The selective shape determination unit 23 then selects at least one type of shape information from among a plurality of types of shape information based on the type of the banknote BN determined by the type determination unit 26a so as to execute defect determination processing as the selective shape determination processing based on the selected at least one type of shape information (step S36), so that the operation of the sheet recognition unit 3 ends.

The order of step S35 and step S36 is not limited and may be reversed.

### (Embodiment 4)

With reference to FIG. 9, the configuration of a sheet recognition unit of the present embodiment is described. FIG. 9 is a block diagram illustrating an example of a configuration of the sheet recognition unit of Embodiment 4.

As shown in FIG. 9, a sheet recognition unit 4 of the present embodiment differs from the sheet recognition unit 1 of Embodiment 1 in that the control unit 20 further includes a type determination unit 26b.

The type determination unit 26b determines the type of the banknote BN based on the pattern on at least one type of an image included in the plurality of types of images acquired by the image acquisition unit 10. Specifically, template images as the reference for different types of banknotes are prepared in advance as template information. The type determination unit 26b cuts out a banknote region from an image and calculates the degree of matching (degree of similarity) between the cutout region and each template image to determine the type of the banknote based on the calculated degree of matching. For example, the type determination unit 26b determines the type corresponding to the template image with the highest degree of matching as the type of the banknote BN.

In the present embodiment, the selective shape determination unit 23 selects at least one type of shape information from among a plurality of types of shape information based on the type of the banknote BN determined by the type determination unit 26b so as to execute selective shape determination processing based on the selected at least one type of shape information. This enables execution of determination processing (selective shape determination processing) related to the shape of the banknote based on the selected shape information according to the type of the banknote determined based on the pattern on the image, thus further increasing the accuracy of the determination processing related to the shapes of banknotes.

The selective shape determination unit 23 may select one type of shape information from among a plurality of types of shape information based on the type of the banknote BN determined by the type determination unit 26b so as to execute size determination processing as the selective shape determination processing based on the selected one type of shape information, and may select at least one type of shape information from among a plurality of types of shape information based on the type of the banknote BN determined by the type determination unit 26b so as to execute defect determination processing as the selective shape determination processing based on the selected at least one type of shape information. This enables determination of the size of the banknote and a defect in the banknote based on the shape information selected according to each type of banknote determined based on the pattern on the image, thus further increasing the accuracy of the size determination processing and the defect determination processing for banknotes.

The one type of shape information selected for the size determination processing and the at least one type of shape information selected for the defect determination processing may include a common type of shape information or may not include a common type of shape information (all the types may be different).

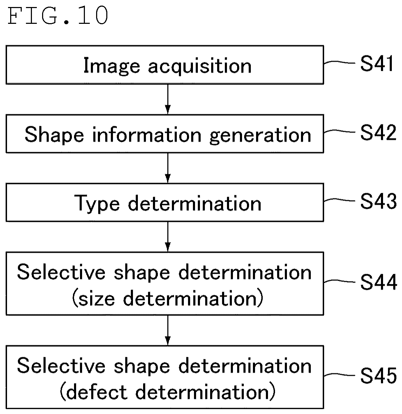

Next, with reference to FIG. 10, the operation of the sheet recognition unit 4 of the present embodiment is described. FIG. 10 is a flowchart illustrating an example of an operation of the sheet recognition unit of Embodiment 4.

As shown in FIG. 10, first, the image acquisition unit 10 acquires a plurality of types of images of a banknote BN (step S41).

Next, the shape information generation unit 21 generates a plurality of types of shape information based on the plurality of types of images (step S42).

Next, the type determination unit 26b determines the type of the banknote BN based on the pattern on at least one type of an image included in the plurality of types of images (step S43).

The selective shape determination unit 23 then selects one type of shape information from among a plurality of types of shape information based on the type of the banknote BN determined by the type determination unit 26b so as to execute size determination processing as the selective shape determination processing based on the selected one type of shape information (step S44).

Thereafter, the selective shape determination unit 23 selects at least one type of shape information from among a plurality of types of shape information based on the type of the banknote BN determined by the type determination unit 26b so as to execute defect determination processing as the selective shape determination processing based on the selected at least one type of shape information (step S45), so that the operation of the sheet recognition unit 4 ends.

The order of step S44 and step S45 is not limited and may be reversed.

### (Embodiment 5)

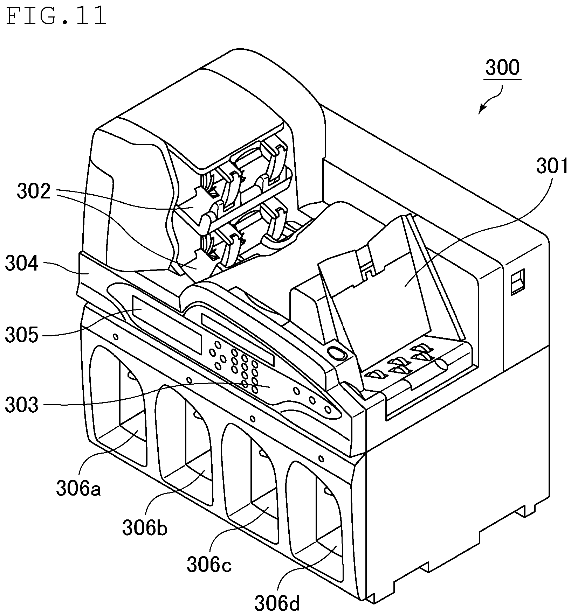

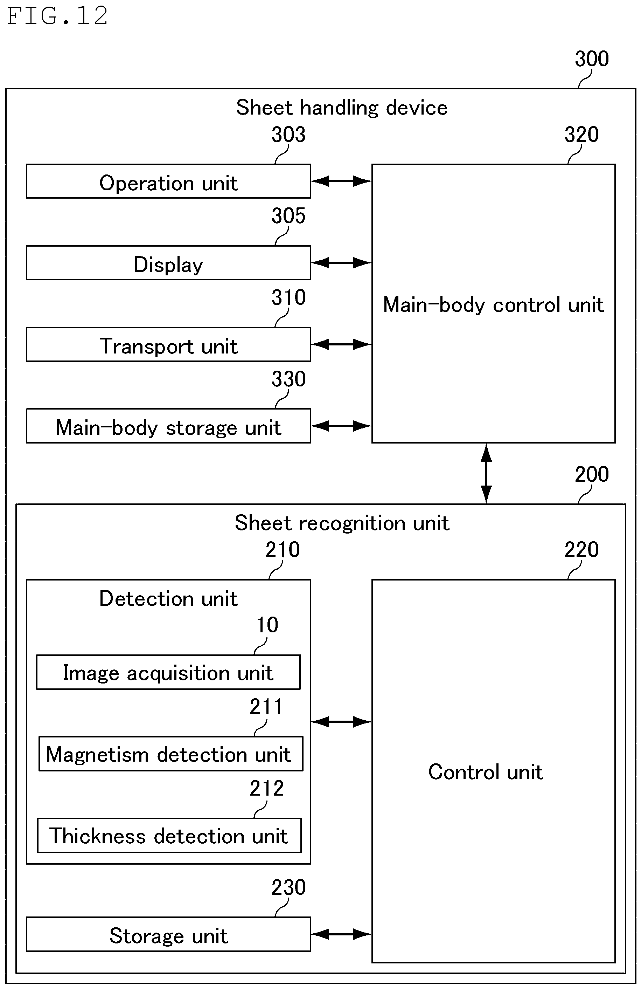

With reference to FIG. 11 and FIG. 12, the configuration of a sheet handling device of the present embodiment is described. FIG. 11 is a schematic perspective view of the appearance of an example of a sheet handling device of Embodiment 5. FIG. 12 is a block diagram illustrating an example of a configuration of the sheet handling device of Embodiment 5.

The sheet handling device of the present embodiment, for example, may have a configuration shown in FIG. 11. A sheet handling device 300 shown in FIG. 11 includes a built-in sheet recognition unit (see FIG. 12) which executes recognition processing for banknotes; a hopper 301 on which a plurality of banknotes to be handled is to be stacked; two rejectors 302 each of which feeds out a banknote that has been determined as a reject note; an operation unit 303 with which the operator inputs commands; four stackers 306a to 306d into each of which banknotes whose type (denomination), authenticity, and fitness have been recognized in a housing 304 are to be sorted and stacked; and a display 305 which displays information including the banknote recognition and counting results and the stacking status in each of the stackers 306a to 306d.

As shown in FIG. 12, the sheet handling device 300 further includes a transport unit 310, a main-body control unit 320, and a main-body storage unit 330.

The transport unit 310 includes a transport roller for transporting banknotes, drive mechanisms (drive source and drive power transmission mechanism) for driving the transport roller, and other components.

The main-body storage unit 330 includes a semiconductor memory (RAM or ROM) and a storage device such as a hard disk, and stores various programs and information (data) for controlling the sheet handling device 300.

The main-body control unit 320 is a controller that controls the components of the sheet handling device 300, and is configured as a computer system including a CPU, and various hardware devices (e.g., FPGA) controlled by the CPU. The main-body control unit 320 uses its CPU to execute predetermined software programs stored in the main-body storage unit 330 (which may be a storage unit provided separately from the main-body storage unit 330) to perform various processing tasks.

As shown in FIG. 12, the sheet recognition unit 200 of the present embodiment includes a detection unit 210, a control unit 220, and a storage unit 230.

The detection unit 210 detects various properties of a transported banknote and may include, along the transport path for banknotes, a magnetism detection unit 211 and a thickness detection unit 212 as well as the image acquisition unit 10 described above. The image acquisition unit 10, as described above, acquires a plurality of types of images (image data) of a banknote and outputs the images.

The storage unit 230 includes a semiconductor memory (R_AM or ROM) and a storage device such as a hard disk, and stores various programs and information (data) for controlling the sheet recognition unit 200.

The control unit 220 is a controller that controls the components of the sheet recognition unit 200, and is configured as a computer system including a CPU, and various hardware devices (e.g., FPGA) controlled by the CPU. The control unit 220 uses its CPU to execute the predetermined software programs to perform various processing tasks.

The control unit 220 has a function of executing, using the programs stored in the storage unit 230, processing of generating a plurality of types of shape information based on a plurality of types of images; processing of selecting at least one type of shape information from among a plurality of types of shape information; processing of executing the selective shape determination processing based on the selected at least one type of shape information; and processing of executing the fixed shape determination processing based on the preset shape information among the plurality of types of shape information. These processing tasks executed by the control unit 220 are similar to the processing tasks executed by the control unit 20 described in Embodiments 1 to 4, so that the detailed description thereof is omitted.

As described above, the control unit 220 uses various signals related to the banknote acquire by the detection unit 210 to execute recognition processing. The control unit 220 recognizes at least the type (denomination) and authenticity of the banknote. The control unit 220 may have a function of determining the fitness of a banknote. In this case, the control unit 220 may have a function of detecting a stain/soil, a fold, a tear, and/or other defects in a banknote and detecting a material such as tape attached to the banknote based on the thickness of the banknote, and thereby determining whether the banknote should be handled as a fit not suitable for circulation or as an unfit note unsuitable for circulation.

In this case, the control unit 220 uses images (image data) of the banknote acquired by the image acquisition unit 10 to recognize the type (denomination), authenticity, fitness, and other properties of the banknote.

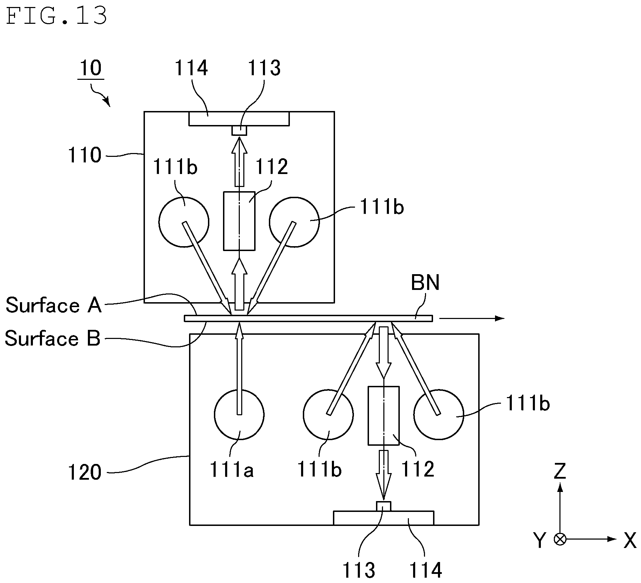

Next, with reference to FIG. 13, the configuration of the image acquisition unit 10 is described. FIG. 13 is a schematic cross-sectional view illustrating an example of a configuration of an image acquisition unit in the sheet recognition unit of Embodiment 5.

As shown in FIG. 13, the image acquisition unit 10 includes sensor units 110 and 120 opposing each other. The sensor units 110 and 120 each include a contact image sensor facing the transport path in the sheet handling device of the present embodiment. A space in which banknotes BN are transported in the X direction in the XY plane is formed between the sensor units 110 and 120 which are spaced from each other in the Z direction. This space defines part of the transport path in the sheet handling device of the present embodiment. The sensor units 110 and 120 are positioned above (+Z direction) and below (-Z direction) the transport path, respectively. The Y direction corresponds to the main scanning direction of the sensor units 110 and 120. The X direction corresponds to the sub-scanning direction of the sensor units 110 and 120.

As shown in FIG. 13, the sensor units 110 and 120 each include two reflection light sources 111b, a condensing lens 112, a light receiving unit 113, and a substrate 114.

Each of the reflection light sources 111b, for example, includes a light guide extending in the main scanning direction and a plurality of types of light emitting elements each facing either one of the end surfaces of the light guide. The light emitting elements emit light having respective wavelengths. The light sources 111b of the sensor unit 110 and the light sources 111b of the sensor unit 120 respectively irradiate the surface A and the surface B of a banknote BN sequentially with light having respective wavelengths. The light sources 111b emit light whose peak wavelengths are different from one another, for example, as the light having respective wavelengths. Specifically, for example, infrared light (which may be a plurality of types of infrared light whose peak wavelengths are different from one another), red light, green light, blue light, white light, ultraviolet light, and other light can be used.

Each condensing lens 112, for example, includes a rod lens array including a plurality of rod lenses arrayed in the main scanning direction and condenses light emitted from the corresponding reflection light sources 111b and reflected by the surface A or surface B of the banknote BN.

Each light receiving unit 113, for example, includes a linear image sensor including a plurality of light receiving elements (light receiving pixels) arrayed in the main scanning direction. Each light receiving element has sensitivity to the wavelength bands of the light having respective wavelengths emitted from the light sources 111b.

Each light receiving element can be, for example, a silicon (Si) photodiode sensitive to a wavelength range at least from the visible to infrared (wavelength of 1100 nm) range. Each light receiving element, mounted on the substrate 114, receives light condensed by the condensing lens 112, converts the light to an electrical signal according to the quantity of the incident light, and outputs the electrical signal to the substrate 114. Each light receiving element receives light having the certain wavelength from each light source 111b based on the timing of emission of the light having the wavelength.

Each substrate 114 includes, for example, a drive circuit for driving light receiving elements and a signal processing circuit for processing signals from the light receiving elements and outputting the processed signals. The substrate 114 amplifies the signals output from the corresponding light receiving unit 113 (light receiving element), converts the amplified signals to digital data by A/D conversion, and outputs the data.

The sensor unit 120 further includes one transmission light source 111a.

The light source 111a is disposed on the axis of the condensing lens 112 of the sensor unit 110. Part of light emitted from the light source 111a is transmitted through a banknote BN, condensed by the condensing lens 112 of the sensor unit 110, and detected by the light receiving unit 113 of the sensor unit 110. The light source 111a sequentially or simultaneously irradiates the surface B of the banknote BN with light in different wavelength bands. The light source 111a emits light whose peak wavelengths are different from one another, for example, as the light having respective wavelengths. Specifically, for example, infrared light, green light, and other light can be used.

The "light having respective wavelengths" means light in different wavelength bands, and their peak wavelengths may be different from one another. The light having respective wavelengths may be, for example, light having different colors in the case of visible light, and light in overlapping wavelength bands or light in non-overlapping wavelength bands in the case of infrared light and ultraviolet light.

In the present embodiment, the control unit 220 performs processing similar to that performed by the control unit 20 described in Embodiments 1 to 4, so that the accuracy of determination processing related to the shape of a banknote can be increased as in Embodiments 1 to 4.

Embodiments 1 to 5 describe the cases where the sheet recognition unit and the sheet handling device are independent devices. Yet, the functions of the sheet recognition unit and the sheet handling device may be achieved by a distributed processing system in which these functions are distributed to a plurality of devices as appropriate. For example, the image acquisition unit and the control unit of the sheet recognition unit may be provided in different devices (terminals). In addition, for example, the selection processing by the selective shape determination unit may be extracted, so that the processing (shape information selection unit) of selecting at least one type of shape information from among a plurality of types of shape information and the selective shape determination processing by the selective shape determination unit may be executed in different devices (terminals).

### (Embodiment 6)

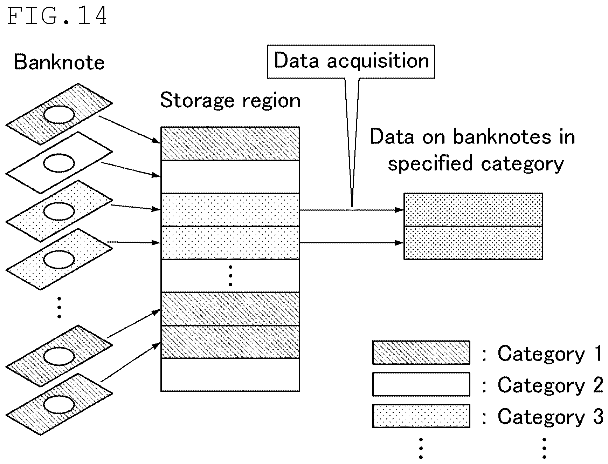

With reference to FIG. 14, a sheet handling device of the present embodiment is described. FIG. 14 is a schematic view illustrating the processing executed by the sheet handling device of Embodiment 6. The sheet handling device of the present embodiment may have a configuration similar to that of the sheet handling device of Embodiment 5.

As shown in FIG. 14, in the present embodiment, the data on banknotes counted by the sheet recognition unit is stored in the storage region in the storage unit of the sheet recognition unit. The stored data on each banknote is linked with information on the category determined by the sheet recognition unit. The category may be any of the following types (five categories) specified by the European Central Bank (ECB).
Category 1: Objects not recognized as banknotes
Category 2: Suspect counterfeit banknotes
Category 3: Banknotes that are not clearly authenticated Category 4a: Banknotes that are identified as genuine and fit (crisp banknotes)
Category 4b: Banknotes that are identified as genuine and unfit

When the user of the sheet handling device specifies the category when requesting data on banknotes counted from the operation unit, the sheet handling device selectively acquires data on banknotes in the specified category from the storage unit in the sheet recognition unit, and displays the data on the display of the sheet handling device, for example. This enables efficient acquisition of only the data on banknotes in the desired category.

The data on banknotes in the specified category acquired from the sheet recognition unit may be transmitted to a higher-level management system of the sheet handling device.

Such acquisition of only the data on banknotes in a specific category may be automatically requested not by a human but by the sheet handling device or a higher-level management system depending on the setting conditions.

The embodiments of the present disclosure have been described above with reference to the drawings. The present disclosure is not limited to these embodiments. The configurations of the embodiments may be combined or modified as appropriate within the spirit of the present disclosure.

### INDUSTRIAL APPLICABILITY

As described above, the present disclosure provides a technique useful in increasing the accuracy of determination processing related to the shapes of sheets.

## Claims

1. A sheet recognition unit which recognizes a sheet, the sheet recognition unit comprising:
an image acquisition unit configured to acquire a plurality of types of images of the sheet; and
a control unit configured:
to generate a plurality of types of shape information based on the plurality of types of images, and
to select at least one type of shape information from among the plurality of types of shape information so as to execute selective shape determination processing which is determination processing related to a shape of the sheet based on the selected at least one type of shape information.

2. The sheet recognition unit according to claim 1,
wherein the control unit is configured to select the at least one type of shape information based on a type of the sheet.

3. The sheet recognition unit according to claim 1 or 2,
wherein the control unit is configured to execute defect determination processing of determining a defect in the sheet as the selective shape determination processing.

4. The sheet recognition unit according to any one of claims 1 to 3,
wherein the control unit is configured to execute, before the selective shape determination processing, fixed shape determination processing which is determination processing related to a shape of the sheet based on preset shape information among the plurality of types of shape information.

5. The sheet recognition unit according to claim 4,
wherein the control unit is configured to execute size determination processing of determining a size of the sheet as the fixed shape determination processing.

6. The sheet recognition unit according to claim 5,
wherein the control unit is configured:
to determine a type of the sheet based on a result of the size determination processing, and
to select at least one type of shape information from among the plurality of types of shape information based on the determined type so as to execute defect determination processing of determining a defect in the sheet as the selective shape determination processing based on the selected at least one type of shape information.

7. The sheet recognition unit according to claim 5,
wherein the control unit is configured:
to determine a type of the sheet based on a result of the size determination processing, and
to select one type of shape information from among the plurality of types of shape information based on the determined type so as to re-execute the size determination processing as the selective shape determination processing based on the selected one type of shape information.

8. The sheet recognition unit according to claim 7,
wherein the control unit is configured, after executing the size determination processing as the selective shape determination processing, to select at least one type of shape information from among the plurality of types of shape information based on the determined type so as to execute defect determination processing of determining a defect in the sheet as the selective shape determination processing based on the selected at least one type of shape information.

9. The sheet recognition unit according to any one of claims 1 to 3,
wherein the control unit is configured:
to determine a type of the sheet based on a pattern on at least one type of an image included in the plurality of types of images, and
to select at least one type of shape information from among the plurality of types of shape information based on the determined type so as to execute the selective shape determination processing based on the selected at least one type of shape information.

10. The sheet recognition unit according to claim 9,
wherein the control unit is configured:
to select one type of shape information from among the plurality of types of shape information based on the determined type so as to execute size determination processing of determining a size of the sheet as the selective shape determination processing based on the selected one type of shape information, and
to select at least one type of shape information from among the plurality of types of shape information based on the determined type so as to execute defect determination processing of determining a defect in the sheet as the selective shape determination processing based on the selected at least one type of shape information.

11. The sheet recognition unit according to any one of claims 1 to 10,
wherein the image acquisition unit is configured to acquire at least a transmission image and a reflection image of the sheet as the plurality of types of images, and
the control unit is configured to generate first shape information by detecting an edge of the sheet in the transmission image and also generate second shape information by generating an OR-processed image through OR-processing of the transmission image and the reflection image and detecting an edge of the sheet in the generated OR-processed image.

12. The sheet recognition unit according to claim 11,
wherein the control unit is configured:
to execute the selective shape determination processing based on the second shape information in a case where the sheet has a transparent portion in an end, and
to execute the selective shape determination processing based on the first shape information in a case where the sheet has no transparent portion in any end.

13. A sheet handling device comprising:
the sheet recognition unit according to any one of claims 1 to 12.

14. A sheet recognition method for recognizing a sheet, the sheet recognition method comprising the steps of:
acquiring a plurality of types of images of the sheet;
generating a plurality of types of shape information based on the plurality of types of images; and
selecting at least one type of shape information from among the plurality of types of shape information so as to execute selective shape determination processing which is determination processing related to a shape of the sheet based on the selected at least one type of shape information.
